Europäisches Patentamt

European Patent Office

Office européen des brevets

(11) Veröffentlichungsnummer: **0 483 605 A2**

## EUROPÄISCHE PATENTANMELDUNG

(21) Anmeldenummer: **91117686.5**

(22) Anmeldetag: **16.10.91**

(51) Int. Cl.5: **B60P 7/13**

(30) Priorität: **02.11.90 DE 9015095 U**
**17.12.90 DE 9017024 U**

(43) Veröffentlichungstag der Anmeldung:
**06.05.92 Patentblatt 92/19**

(84) Benannte Vertragsstaaten:
**BE DE ES FR GB IT NL**

(71) Anmelder: **Westerwälder Eisenwerk Gerhard GmbH**
**Ringstrasse 20**
**W-5241 Weitefeld(DE)**

(72) Erfinder: **Gerhard, Helmut**
**Im Schlosssteinchen 31**
**W-5241 Weitefeld(DE)**

(74) Vertreter: **Strehl, Schübel-Hopf, Groening**
**Maximilianstrasse 54 Postfach 22 14 55**
**W-8000 München 22(DE)**

(54) Anordnung zum Sichern einer Ladeeinheit.

(57) Zum Sichern einer Ladeeinheit 17 (Container oder Palette) an einem auf einer Fahrzeug-Ladefläche vorhandenen Arretierungselement (Dorn oder Drehschloß) dient eine Riegelplatte 20, die Löcher 23, 24 zum Eingriff des Arretierungselements aufweist und in einen an der Unterseite der Ladeeinheit 17 vorgesehenen Beschlag 10 eingreift. Riegelplatte 20 und Beschlag 10 sind so gestaltet, daß sich die Riegelplatte in zwei um 90° gedrehten Richtungen oder auch in unterschiedlichen Längsstellungen in dem Beschlag 10 verankern läßt.

FIG.5

Eine Anordnung zum Sichern einer Ladeeinheit (Container, Tankcontainer, Flat, Palette) an einem auf einer Fahrzeug-Ladefläche vorhandenen Arretierungselement (Drehschloß oder Dorn) mit den im ersten Teil des Anspruchs 1 angegebenen Merkmalen ist aus EP 0 189 054 A2 bekannt. Dort läßt sich eine Riegelplatte aus der Ecköffnung eines an der Ladeeinheit vorgesehenen unteren Eckbeschlages derart herausführen, daß sie mit einem seitlichen Langloch an einem Arretierungselement fixiert werden kann. Die bekannte Anordnung ist so gestaltet, daß eine Ankopplung an das Arretierungselement nur in einer einzigen relativen Stellung der Ladeeinheit bezüglich des Arretierungselements und nur im Bereich der vorderen und/oder hinteren Kante der Ladeeinheit möglich ist. Entspricht die Länge der Ladeeinheit in Fahrtrichtung nicht dem genormten Abstand zwischen zwei auf der Ladefläche vorhandenen Arretierungselementen, so ist nur eine Sicherung um die vordere oder hintere Kante der Ladeeinheit mit der sich daraus ergebenden Kippgefahr möglich.

Die Kippgefahr wird bei der Anordnung nach EP 0 244 731 A2 dadurch vermieden, daß eine Riegelplatte nicht im Bereich einer Ecke der Ladeeinheit sondern an einer mittleren Stelle eines unteren Rahmenelementes in einer Gabelstapleröffnung verankert wird. Auch hier ist eine derartige Sicherung nur dann möglich, wenn die Ladeeinheit in einer vorgegebenen Stellung und Ausrichtung relativ zu dem Arretierungselement steht.

Eine weitere Möglichkeit der Sicherung einer Ladeeinheit ist in EP 0 401 639 A1 beschrieben. Dort sind an zwei gegenüberliegenden Stellen des unteren Rahmens eines Containers Doppelbeschläge vorgesehen, deren jeder zwei Löcher zum gleichzeitigen Eingriff in zwei Arretierungselemente aufweist, die im Abstand von im wesentlichen 280 mm an der Fahrzeug-Ladefläche vorgesehen sind. Wiederum setzt dieser Doppeleingriff voraus, daß die Ladeeinheit in einer vorgegebenen Position und Orientierung zu den Arretierungselementen steht.

Aus DD 283 115 A5 ist es bekannt, an der Oberseite eines Rahmens, der zur Befestigung eines Containers dient, Riegelplatten mit jeweils einem Langloch zum Eingriff der Drehschlösser eines Spreaders vorzusehen. Die Riegelplatten sind ausfahr- und drehbar, um einen an dem Rahmen im selben Bereich vorhandenen Drehschloßkopf zu passieren.

Der Erfindung liegt die Aufgabe zugrunde, eine Anordnung zu schaffen, die bei der Sicherung einer Ladeeinheit an einem Arretierungselement größere Flexibilität hinsichtlich der gegenseitigen Stellung gewährleistet und dadurch eine bessere Ausnutzung der verfügbaren Ladefläche ermöglicht.

Die Lösung dieser Aufgabe ist mit der in Anspruch 1 gekennzeichneten Erfindung angegeben. Die danach in mindestens zwei verschiedenen Lagen an der Ladeeinheit fixierbare Riegelplatte, die ein Langloch zum Eingriff eines bei Tragwagen oder Paletten üblichen Dorns oder Drehschlosses aufweist, ermöglicht es, die Ladeeinheit wahlweise in verschiedenen, beispielsweise um 90° gegeneinander gedrehten oder auch in einer Richtung gegeneinander versetzten Positionen auf dem Träger zu sichern. Sollen auf einem Fahrzeug, dessen Ladefläche mit Arretierungselementen zum Transport von ISO-genormten Ladeeinheiten versehen ist, solche mit bisher nicht normgerechten Längenabmessungen befördert werden, so bietet die Erfindung die Möglichkeit, die Riegelplatten derart in den jeweiligen Beschlägen zu verankern, daß eine Ankopplung an ein vorhandenes Arretierungselement in verschiedenen relativen Zuordnungen möglich wird.

Ferner wird mehr Flexibilität beim Be- und Entladen erreicht. Je nach dem Format der Ladeeinheiten kann einerseits die vorhandene Ladefläche besser genutzt oder andererseits eine Einheit verladen werden, ohne daß vom Kranführer oder Gabelstaplerfahrer auf eine seitenrichtige Positionierung geachtet werden muß. Bei Containern, die nur von einer oder zwei Seiten befüllt und entleert werden können, ergibt sich die Möglichkeit, diese so zu positionieren, daß ein Be- und Entladen der transportierten Güter möglich ist, ohne daß der Container von dem Tragwagen heruntergenommen werden muß.

Die Anordnung nach Anspruch 2 ermöglicht eine besonders einfache Bedienung der in diesem Falle drehbaren Riegelplatte.

Ein quadratischer Grundriß der Ladeeinheit nach Anspruch 3 hat gegenüber einem rechteckigen den Vorteil, daß die Einheiten so verladen werden können, wie sie auf dem Stapelplatz stehen. Vom Verladepersonal muß nicht auf eine seitenrichtige Anordnung geachtet werden.

Die gemäß Anspruch 5 vorgesehene Vielzahl von Langlöchern entlang zweier gegenüberliegender Seiten ermöglicht eine besonders gute Ausnutzung der vorhandenen Ladefläche, da die Ladeeinheit an einem Arretierungselement in mehreren dicht nebeneinanderliegenden Positionen fixierbar ist. Bei gleichzeitiger Fixierung an zwei benachbarten Arretierungselementen wird außerdem die Sicherheit erhöht.

Die in den Ansprüchen 4 und 6 angegebenen Maße sind bei Tragwagen und Plattformen nach der ISO-Norm besonders vorteilhaft. Die Seitenlänge von 2433 mm ermöglicht das Verbinden zweier Ladeeinheiten, die im Abstand von 106 mm voneinander stehen, mittels eines Koppelriegels, der zwei im Abstand von 280 mm vorgesehene Befestigungselemente aufweist, die in die Langlöcher der Eckbeschläge der beiden Container eingreifen. Der Zwischenraum von 106 mm zwischen den beiden Ladeeinheiten ermöglicht die Fixierung des Koppelriegels an einem Dorn oder Drehschloß eines Tragwagens.

Die Ansprüche 7 bis 20 beziehen sich auf bevorzugte praktische Gestaltungen der Riegelplatte und des sie aufnehmenden, an der Ladeeinheit angeordneten Beschlags. In der Ausgestaltung der Erfindung nach den Ansprüchen 8 bis 11 läßt sich die Ladeeinheit dabei in zwei um 90° gedrehten Positionen an der Ladefläche arretieren, was im Sinne einer höheren Flexibilität in der Handhabung von Ladeeinheiten quadratischer Grundfläche zweckmäßig sein kann. Die Gestaltungen nach den Ansprüchen 8 bis 11 beziehen sich dabei auf besonders einfach herzustellende und robuste Beschläge.

In der Weiterbildung der Erfindung nach Anspruch 13 bis 20 wird eine Variabilität der Verankerung der Riegelplatte in dem Beschlag in Fahrzeug-Längsrichtung erreicht, wobei sich die Ansprüche 16 bis 20 auf verschiedene vorteilhafte Möglichkeiten einer verhältnismäßig feinen Verstellbarkeit beziehen.

Ausführungsbeispiele der Erfindung werden nachstehend anhand der Zeichnungen näher erläutert. Darin zeigt

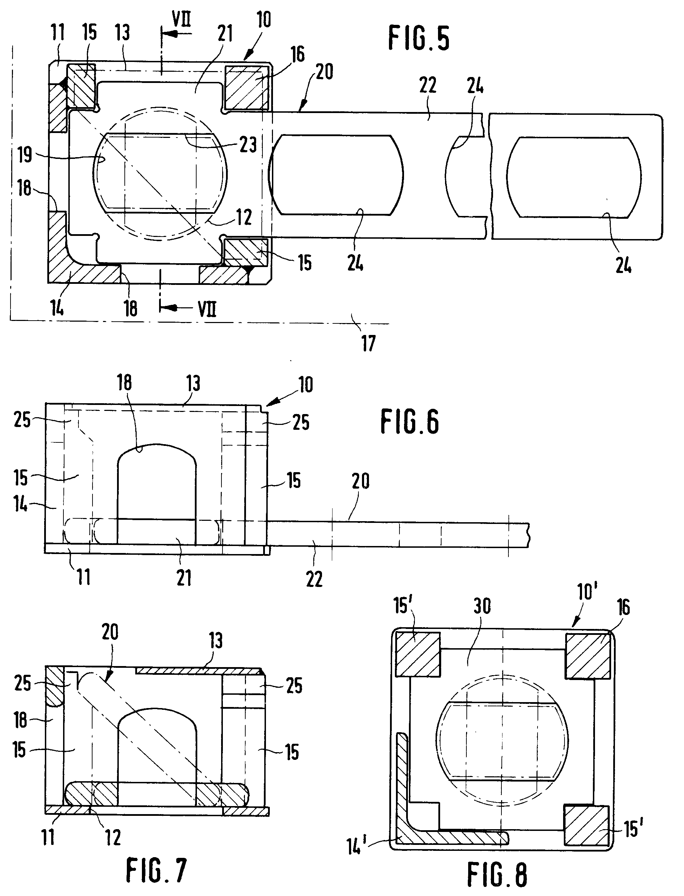

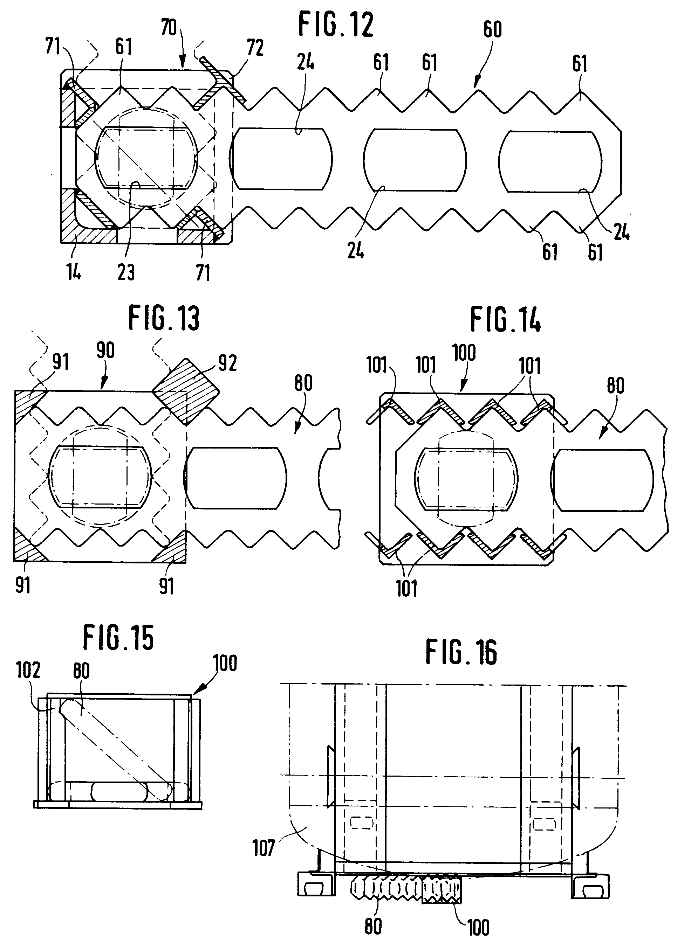

Figur 1 und 2
eine schematische Darstellung eines Eckbeschlags in Draufsicht und im Schnitt,
Figur 3 und 4
die Anordnung von Ladeeinheiten auf einem Tragwagen,
Figur 5
einen Horizontalschnitt durch einen unteren Eckbeschlag einer Ladeeinheit mit einer Draufsicht einer in dem Eckbeschlag verankerten Riegelplatte,
Figur 6
eine Seitenansicht der Anordnung nach Figur 5,
Figur 7
einen Vertikalschnitt längs der Linie VII-VII nach Figur 5,
Figur 8 bis 10
der Figur 5 ähnliche Darstellungen von anderen Ausführungsbeispielen der Erfindung,
Figur 11
eine Unteransicht einer quadratischen Ladeeinheit, wobei Riegelplatten verschiedener Ausführungsformen gleichzeitig in mehreren möglichen Positionen veranschaulicht sind,
Figur 12 bis 14
der Figur 5 ähnliche Darstellungen von weiteren Ausführungsbeispielen der erfindungsgemäßen Anordnung,
Figur 15

eine der Figur 7 ähnliche Darstellung des in der Anordnung nach Figur 14 verwendeten Mittelbeschlags, und
Figur 16
eine teilweise Ansicht eines Tankcontainers mit einem weiteren Ausführungsbeispiel der erfindungsgemäßen Anordnung, von oben gesehen.

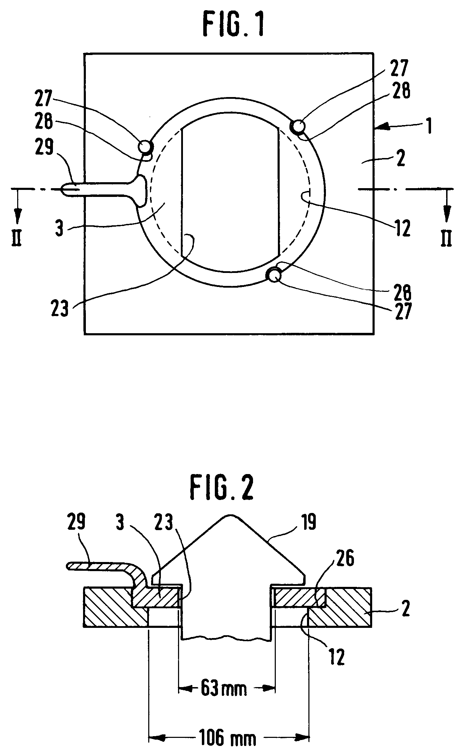

Der in Figur 1 und 2 dargestellte Eckbeschlag 1 weist eine Grundplatte 2 auf, die mit einem kreisförmigen Loch 12 versehen ist. Der Durchmesser des Lochs 12 ist etwas größer als die Länge des Kopfes 19 eines Arretierungselements, d. h. eines Dorns oder Drehschlosses. Konzentrisch zu dem Loch 12 befindet sich in der Grundplatte 2 eine ringförmige Ausnehmung 26 mit etwas größerem Durchmesser, die den Sitz einer Riegelplatte 3 bildet. Die Riegelplatte 3 ist rund und in der Ausnehmung 26 drehbar gelagert. In ihr ist ein Langloch 23 angebracht, das in seiner Länge und Breite wiederum dem Kopf 19 des Arretierungselements entspricht.

Die Abmessungen der Dorne auf Eisenbahnwaggons betragen 100 mm x 50 mm und die von Drehschlössern auf Straßenfahrzeugen 100 mm x 57 mm. Zur Verwendung mit diesen Arretierungselementen sollte das Langloch 23 unter Berücksichtigung des notwendigen Spiels und von Toleranzen eine Länge von ca. 106 mm und eine Breite von ca. 63 mm aufweisen.

Zur einfachen Bedienung und zur sichtbaren Kennzeichnung der Stellung des Langlochs 23 ist an der Riegelplatte 3 ein Griff 29 angebracht. Zur Sicherung gegen unbeabsichtigtes Verdrehen der Riegelplatte 3 und gegen Herausfallen nach oben sind Schraubbolzen 27 (oder nicht dargestellte Deckplatten) vorgesehen, die so ausgeführt sind, daß der Schraubenkopf die Riegelplatte 3 gleitend oder arretierend in ihren von der Ausnehmung 26 gebildeten Sitz drückt. Dabei ist sie gegen Verdrehen entweder durch die mit der Anpreßkraft verbundene Reibung oder, sofern Senkkopfschrauben verwendet werden, dadurch gesichert, daß der Schraubenkopf in Aussparungen 28 der Riegelplatte 3 eingreift.

Die Figur 2 zeigt den in Figur 1 in Draufsicht abgebildeten Eckbeschlag 1 im Schnitt. Der etwa hammerförmige Kopf 19 eines Drehschlosses ist in Figur 1 aus Gründen der Übersichtlichkeit nicht dargestellt.

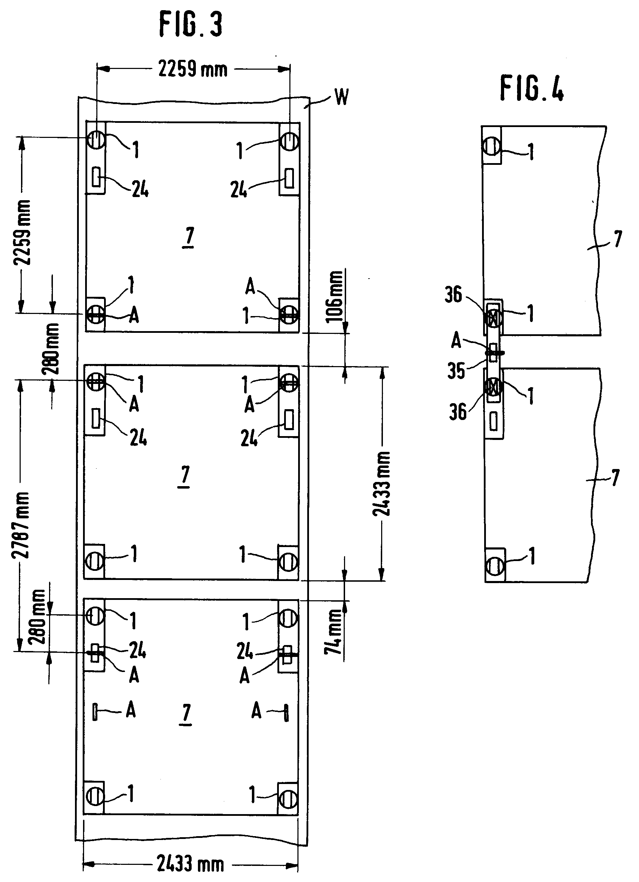

In Figur 3 ist - nicht maßstabsgetreu - dargestellt, wie quadratische Ladeeinheiten 7 mittels Arretierungselementen A auf einem üblichen Eisenbahn-Tragwagen W gesichert werden können. Die Ladeeinheiten 7 sind mit Eckbeschlägen 1 und an zwei gegenüberliegenden Seiten im Abstand von 280 mm dazu mit jeweils mindestens einem zusätzlichen Langloch 24 ausgestattet. Der Abstand zweier Eckbeschläge 1 an jeder Seite einer quadratischen Ladeeinheit 7 beträgt entsprechend der ISO-Normung für den Abstand zweier Arretierungselemente A quer zur Fahrtrichtung 2259 mm. Als Seitenlänge der Ladeeinheit 7 wurde 2433 mm gewählt, was die untere Toleranzgrenze der Breite von ISO-Containern darstellt. Die ISO-Normalbreite beträgt 2438 mm.

Dadurch ergibt sich ein Zwischenraum von 106 mm zwischen zwei Ladeeinheiten 7, die wie dargestellt an einem Paar von im Abstand von 280 mm vorhandenen Arretierungselementen A fixiert sind. Bei Arretierungselementen im Abstand von 2787 mm für 10'-ISO-Container beträgt der Zwischenraum zwischen zwei Containern 74 mm.

Die angegebenen Zwischenräume sind groß genug, um jede beliebige Ladeeinheit 7 problemlos mittels eines Gabelstaplers oder eines Krans von dem Tragwagen herunternehmen oder wieder auf ihn aufsetzen zu können. Andererseits stehen die Ladeeinheiten dicht genug, um sich gegenseitig am Kippen zu hindern. Dies ist besonders wichtig, wenn sie nur an zwei auf einer quer zur Fahrtrichtung verlaufenden Achse befindlichen Eckbeschlägen 1 befestigt sind.

Die Seitenlänge einer Ladeeinheit 7 von 2433 mm hat den besonderen Vorteil, daß zwei nebeneinanderstehende Ladeeinheiten, deren Eckbeschläge 1 sich im Abstand von 280 mm voneinander befinden, einen Zwischenraum von 106 mm frei lassen. Dies ermöglicht es, die beiden Ladeeinheiten 7, wie in Figur 4 gezeigt, mit einem Koppelriegel 35 zu verbinden, der im Abstand von 280 mm mit Befestigungselementen 36 zum Eingriff in die Eckbeschläge 1 versehen ist. Der genannte Zwischenraum ist dabei für ein Arretierungselement A ausreichend bemessen, mit dessen Hilfe der Koppelriegel 35, der dort ein Langloch aufweist, fixiert wird. Auf diese Weise lassen sich zwei Ladeeinheiten 7 an einem einzigen Arretierungselement A befestigen.

Obwohl schon ein einziger, mit einer drehbaren Riegelplatte 3 versehener Eckbeschlag 1 zu einem erheblichen Gewinn an Flexibilität beim Beladen von Tragwagen W mit Ladeeinheiten 7 führt, kann es vorteilhaft sein, zwei, drei oder alle vier Eckbeschläge mit drehbaren Riegelplatten 3 auszustatten.

In Figur 3 sind quadratische Ladeeinheiten 7 dargestellt. Die Erfindung kann jedoch auch vorteilhaft bei rechteckigen Einheiten angewandt werden, die beispielsweise eine Grundfläche von 2433 mm x 1200 mm haben können und paarweise in Längsrichtung auf einem Tragwagen W stehen. Bei solchen kleinen Ladeeinheiten ist die Befestigung an jeweils nur einem Arretierungselement ausreichend. Zum Schutz gegen ein Verdrehen oder Verrutschen können die Einheiten paarweise durch Riegel, die ähnlich dem in Figur 4 gezeigten Koppelriegel 35 ausgebildet sind, verbunden sein.

Der in Figur 5 bis 7 im Detail gezeigte Eckbeschlag 10 besteht aus einer 8 mm dicken Grundplatte 11 mit einem mittig angeordneten kreisrunden Loch 12, einer im wesentlichen dreieckigen Deckplatte 13, einem Winkelprofilelement 14 und drei Eckstützen 15, 16. Das Winkelprofilelement 14 weist mit seiner Außenkante zur Außenecke der Ladeeinheit, deren äußere Begrenzung in Figur 5 bei 17 angedeutet ist. Die Deckplatte 13 kann auch Teil des Bodens der Ladeeinheit 17 selbst sein. In jeder Flanke des Winkelprofilelements 14 ist ein Ausschnitt 18 mit parallelen Kanten vorgesehen, der zur Grundplatte 11 hin offen ist, in seiner oberen runden Begrenzung jedoch der Öffnung an der Stirnseite eines Eckbeschlags gemäß ISO 1161 entspricht.

Die der Außenkante gegenüberliegende Stütze 16 wird von einem Vierkant-Profilstück gebildet. Jede der beiden weiteren Stützen 15 besteht aus einem Rechteck-Profilstück und ist mit dem betreffenden Ende des Winkelprofilelements 14 verschweißt. Die Stütze 16 ist im Querschnitt quadratisch, während die Stützen 15 so bemessen sind, daß sie in Verbindung mit den Flanken des Winkelprofilelements 14 im gleichen Maße in den Eckbeschlag 1 hineinragen wie die Stütze 16.

Die in Figur 5 strichpunktiert eingetragene dreieckige Deckplatte 13 liegt auf den oberen Flächen der Stützen 15 und 16 auf und weist eine mit dem oberen Ende des Winkelprofilelements 14 bündige obere Fläche auf. In anderer Ausführungsform kann das Winkelprofilelement 14 nach oben durchgehen und ein Eckelement der Ladeeinheit 17 oder ihrer Bodengruppe bilden.

In den Eckbeschlag 10 nach Figur 5 bis 7 ist eine Riegelplatte 20 eingelegt, die einen innerhalb des Eckbeschlags 10 liegenden Kopf 21 und einen aus dem Eckbeschlag 10 seitlich herausragenden Ansatz 22 umfaßt. Der Kopf 21 der Riegelplatte 20 weist eine im wesentlichen balkenkreuzartige Form auf und ist mit einem Langloch 23 versehen, dessen Mitte mit der Mitte des in der Grundplatte 11 des Eckbeschlags 10 vorhandenen kreisrunden Loch 12 zusammenfällt und dessen Form der unteren Öffnung eines Eckbeschlags nach ISO 1161 zum Ankoppeln an einen Arretierungsdorn oder ein Drehschloß bei etwas verminderter Länge entspricht. In Figur 5 ist ein Drehschloßkopf 19 sowohl in seiner Einführstellung als auch in seiner dazu senkrechten Verriegelungsstellung strichpunktiert eingezeichnet.

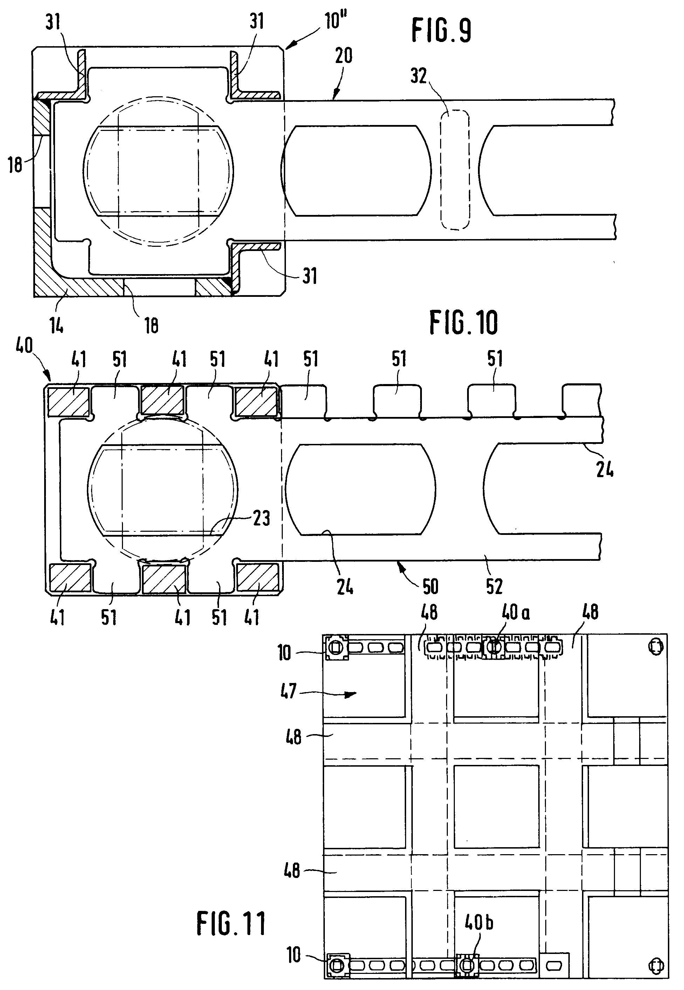

Die Dicke der Riegelplatte 20 beträgt 20 mm, so daß die von der Riegelplatte 20 und der Grundplatte 11 des Eckbeschlags 10 gebildete Gesamtdicke von 28 mm dem Norm-Wulst bei unteren ISO-Eckbeschlägen entspricht. Der aus dem Eckbeschlag herausragende Ansatz 22 kann mit (in Figur 9 bei 32 gezeigten) unteren Vorsprüngen versehen sein, die gegenüber der unteren Fläche des Ansatzes 22 um 8 mm, d. h. entsprechend der Höhe der Grundplatte 11 des Eckbeschlags 10, herausragen.

Die Breite des Ansatzes 22 ist etwas geringer als der Abstand zwischen den Stützen 15 und 16 des Eckbeschlags 10. Die die Balkenkreuz-Form des Kopfes 21 bildenden übrigen drei Vorsprünge haben die gleiche Breite wie der Ansatz 22 und sind in ihrer Länge so bemessen, daß sie knapp vor der Innenfläche des Winkelprofilelements 14 enden.

Wie insbesondere aus Figur 5 ersichtlich, ist der Eckbeschlag 10 bezüglich der durch das Winkelprofilelement 14 und die Stütze 16 verlaufenden Diagonale symmetrisch gestaltet. Daher läßt sich die Riegelplatte 20 sowohl in der in Figur 1 gezeigten Stellung als auch in einer dazu um 90° gedrehten Stellung, in der der Ansatz 22 in Figur 5 nach oben ragt, in den Eckbeschlag 10 einlegen.

Wie aus Figur 5 weiter hervorgeht, weist der Ansatz 22 der Riegelplatte 20 weitere Langlöcher 24 auf, die in ihrer Form dem Langloch 23 entsprechen und deren Mitten auf einer Achse in einem gegenseitigen Abstand von jeweils 140 mm angeordnet sind. Daher läßt sich die Ladeeinheit 17 nicht nur in zwei um 90° gedrehten Positionen an der mit dem betreffenden Arretierungselementen versehenen Fahrzeug-Ladefläche sichern sondern auch in unterschiedlichen Stellungen in Richtung der Fahrzeug-Längsachse. Der genannte Abstand von 140 mm ist insofern zweckmäßig, als auf Ladeflächen zum Transport von ISO-Containern jeweils Paare von Arretierungselementen in einem gegenseitigen Abstand von ca. 280 mm vorhanden sind. Insgesamt ist der Ansatz 22 der Riegelplatte 20 nach Figur 5 mit drei oder auch vier Langlöchern 24 versehen.

Die Riegelplatte 20 wird durch die zwischen der Stütze 16 und einer der beiden Stützen 15 gebildete stirnseitige Öffnung unter Schrägstellung der Riegelplatte in den Eckbeschlag 10 eingeführt. Diese Schrägstellung ist in Figur 7 strichpunktiert eingetragen. Um die Höhe des Eckbeschlags 10 möglichst gering zu halten und trotzdem die beschriebene Einführung zu gestatten, sind die Stützen 15, wie in Figur 6 und 7 angedeutet, in ihrem oberen Bereich 25 in der Dicke verringert.

Die Variante nach Figur 8 unterscheidet sich von der Gestaltung nach Figur 5 bis 7 dadurch, daß das Winkelprofilelement 14' mit kürzeren Flanken ausgebildet ist und alle drei Stützen 15' und 16 des Eckbeschlags 10' mit quadratischem Querschnitt ausgebildet sind. Ferner besteht in Figur 8 die Riegelplatte 30 nach Figur 8 lediglich aus einem etwa kreuzbalkenförmigen Teil, das dem Kopf 21 der Riegelplatte 20 nach Figur 5 entspricht. Auch die Riegelplatte 30 läßt sich mit zwei um 90° gedrehten Orientierungen in den Eckbeschlag 10' einlegen.

In der Variante nach Figur 9 sind die beiden äußeren Flächen des Eckbeschlags 10'' wiederum von einem Winkelprofilelement 14 gebildet, dessen Flanken wie in dem Ausführungsbeispiel nach Figur 5 bis 7 mit Ausschnitten 18 versehen, jedoch etwas kürzer bemessen sind. Die in den drei übrigen Ecken vorhandenen Stützen bestehen gemäß Figur 9 aus weiteren Winkelprofilstücken 31 die jeweils mit ihrer Kante dem Innern des Eckbeschlags 10'' zugewandt sind. Die Enden des Winkelprofilelements 14 sind mit den Außenflanken der Winkelprofilstücke 31 verschweißt.

Die Riegelplatte 20 nach Figur 9 ist mit der in Figur 5 identisch, wobei an einer Stelle in Figur 9 einer der oben erwähnten, um 8 mm über die untere Fläche des Ansatzes 22 herausragenden Vorsprünge bei 32 angedeutet ist.

Figur 10 zeigt einen Mittelbeschlag 40, der an einer zwischen zwei Ecken befindlichen mittleren Stelle einer Ladeeinheit angeordnet sein kann (vgl. 40a, 40b in Figur 11).

Ein derartiger Mittelbeschlag kann aus einer Grundplatte, einer Deckplatte und vier Vierkant-Stützen mit quadratischem oder rechteckigem Querschnitt ähnlich den Stützen 15, 16 nach Figur 5 oder 8 bestehen. In der Gestaltung nach Figur 10 weist der Mittelbeschlag 40 insgesamt sechs Stützen 41 mit rechteckigem Querschnitt auf, und die Riegelplatte 50 ist in dem Bereich, in dem sie in den Mittelbeschlag 40 eingreift, an jeder Seite mit zwei Vorsprüngen 51 versehen, die zahnartig zwischen die Stützen 41 des Beschlags 40 eingreifen.

Wie an der in Figur 10 oberen Kante des Ansatzes 52 der Riegelplatte 50 angedeutet, können die Vorsprünge 51 auch über die gesamte Länge der Riegelplatte, und zwar vorzugsweise auf beiden Seiten, vorgesehen sein, so daß sich die Riegelplatte 50 in einer Vielzahl unterschiedlicher Längenstellungen in dem Mittelbeschlag 40 verankern läßt.

Wie in Figur 10 ferner gezeigt, ist der Mittenabstand zwischen den Langlöchern 23, 24 kein ganzzahliges Vielfaches der Teilung zwischen den zahnartigen Vorsprüngen 51. Dadurch ergibt sich eine noniusartige Fein-Verstellmöglichkeit hinsichtlich der Kopplung der Ladeeinheit an einem Arretierungselement.

Die in Figur 11 gezeigte Ladeeinheit 47 ist insgesamt quadratisch, wobei zwei Eckbeschläge 10 und zwei Mittelbeschläge 40a, 40b eingezeichnet sind. Die Ladeeinheit 47 ist mit zwei Paaren von zueinander senkrecht verlaufenden Gabelstaplerkanälen 48 versehen. Durch wahlweises Einlegen einer Riegelplatte in einen Eckbeschlag 10 oder in einen Mittelbeschlag 40a, 40b mit wahlweiser Erstreckung des Ansatzes nach rechts oder links in Figur 11 läßt sich die Ladeeinheit 47, die natürlich noch um 180° gedreht werden kann, an nahezu jeder beliebigen Stelle mit einem Arretierungselement koppeln.

In Figur 11 sind die Mittelbeschläge 40a, 40b an der oberen und an der unteren Kante an unterschiedlichen Stellen eingezeichnet, wobei sich der Beschlag 40a nahezu in der Mitte der Längskante der Ladeeinheit 47 befindet, während der Beschlag 40b außerdem als seitliche Begrenzung des Gabelstaplerkanals dient. Die Darstellung dient der Veranschaulichung der verschiedenen Anordnungsmöglichkeiten. Bei einer praktischen Ausführung sind die Mittelbeschläge 40a oder 40b einander gegenüber angeordnet. Zur Erzielung einer möglichst hohen Vielzahl von Koppelstellungen ist es allerdings zweckmäßig, die Mittelbeschläge 40 gegenüber der mittleren Querachse der Ladeeinheit 47 zu versetzen.

Ferner sind oben und unten in Figur 11 unterschiedliche Riegelplatten gezeigt. Auch dies entspricht nicht einem tatsächlichen Anwendungsfall, sondern dient lediglich zur Veranschaulichung der verschiedenen Ausführungsformen der Erfindung.

Die Riegelplatte 60 nach Figur 12 unterscheidet sich von der nach Figur 10 dadurch, daß die zahnartigen Vorsprünge 61 nicht rechteckig sondern dreieckig sind und mit ihren Flanken unter 45° zur Längsachse der Riegelplatte 60 verlaufen. Wiederum ist die Zahnteilung so gewählt, daß sie kein ganzzahliger Teil des Mittenabstandes zwischen den Langlöchern 23, 24 ist.

Der in Figur 12 gezeigte Eckbeschlag 70 weist in Übereinstimmung mit den dreieckigen zahnartigen Vorsprüngen 61 der Riegelplatte 60 Eckstützen 71, 72 mit schräggestellten Anlageflächen auf. Wiederum ist der Eckbeschlag 70 zu der durch die äußere Ecke des Winkelprofilelements 14 und die innere Eckstütze 72 verlaufenden Diagonalen symmetrisch gestaltet, so daß sich die Riegelplatte 60 nicht nur in der in Figur 12 in ausgezogenen Linien dargestellten Stellung sondern auch senkrecht dazu in der gestrichelt angedeuteten Stellung in den Eckbeschlag 70 einlegen läßt. Die innere Eckstütze 72 hat dabei die Form einer in Richtung dieser Diagonalen stehenden Platte oder, wie gezeigt, eines T-Profilstück mit diagonal verlaufendem Steg.

In der Variante nach Figur 13 weist die Riegelplatte 80 eine gegenüber der Riegelplatte 60 noch feinere Zahnteilung auf. Dadurch ergibt sich an dem Eckbeschlag 90 die Möglichkeit, alle vier Stützen 91, 92 so zu gestalten, daß sie mit unter 45° verlaufenden Flächen dem Mittelpunkt des Eckbeschlags 90 zugewandt sind. Die Riegelplatte 80 wird auf diese Weise auch bei Beaufschlagung mit einer Zugkraft, die sie aus dem Eckbeschlag 90 herauszuziehen sucht, auf beiden Seiten von den jeweiligen Stützen 91, 92 symmetrisch formschlüssig gehalten.

Figur 14 veranschaulicht die in Figur 13 gezeigte Riegelplatte 80 in Verbindung mit einem Mittelbeschlag 100, dessen Seitenwände von jeweils vier in einer Reihe angeordneten und unter 45° gedrehten Winkelprofilstücken 101 gebildet sind. Wie in Figur 15 gezeigt, können dabei die Winkelprofilstücke 101 auf einer Seite des Mittelbeschlags 100 im oberen Bereich 102 reduziert sein, um ein schräges Einführen der Riegelplatte 80 bei geringer Höhe des Beschlags 100 zu gestatten.

Figur 16 zeigt die Anordnung des Mittelbeschlags 100 mit der Riegelplatte 80 nach Figur 14 am Stirnende eines Tankcontainers 107.

Die in Figur 5 bis 16 veranschaulichten Gestaltungen der Riegelplatte können auch bei den Anordnungen nach Figur 3 und 4 verwendet werden.

**Patentansprüche**

1. Anordnung zum Sichern einer Ladeeinheit an einem auf einem Träger vorhandenen Arretierungselement, mit einer horizontalen, bewegbaren Riegelplatte (3, 20, 30, 50, 60, 80), die ein Langloch (23, 24) aufweist, und einer Einrichtung (21, 27, 28, 51, 61) zum Fixieren der Riegelplatte in einer für den Eingriff des Arretierungselements in das Langloch geeigneten Lage,
   dadurch gekennzeichnet, daß die Fixiereinrichtung (21, 27, 28, 51, 61) die Riegelplatte (3, 20, 30, 50, 60, 80) in jeweils einer von mindestens zwei verschiedenen Lagen in gleicher Ebene fixiert.

2. Anordnung nach Anspruch 1, dadurch gekennzeichnet, daß die Riegelplatte (3) mit einem Griff (29) zum manuellen Drehen der Riegelplatte (3) und zur Anzeige ihrer Winkelstellung versehen ist.

3. Anordnung nach Anspruch 1 oder 2, dadurch gekennzeichnet, daß die Ladeeinheit (7, 47) einen quadratischen Grundriß hat.

4. Anordnung nach Anspruch 3, dadurch gekennzeichnet, daß die Seitenlänge der Ladeeinheit (7) 2433 bis 2438 mm beträgt und die in zwei Eckbeschlägen (1) vorgesehenen Langlöcher (23) jeweils in einem Mittenabstand von 2259 mm voneinander angeordnet sind.

5. Anordnung nach einem der Ansprüche 1 bis 4, dadurch gekennzeichnet, daß an zwei gegenüberliegenden Seiten der Ladeeinheit (7) - jeweils vorzugsweise im Bereich zwischen einer Ecke und der Mitte der Seite - mehrere Langlöcher (23, 24) vorgesehen sind.

6. Anordnung nach Anspruch 5, dadurch gekennzeichnet, daß sämtliche Langlöcher (23, 24) in einem Mittenabstand von 140 mm oder 280 mm voneinander angeordnet sind.

7. Anordnung nach Anspruch 1, dadurch gekennzeichnet, daß an der Ladeeinheit (17, 47) ein Eckbeschlag (10, 70, 90) vogesehen ist, der in zwei um 90° gedrehten Lagen gleiche seitliche Ausformungen hat.

8. Anordnung nach Anspruch 7, dadurch gekennzeichnet, daß die Seitenwände des Eckbeschlags (10, 70) von einem stehenden Winkelprofilelement (14) mit der Ecke der Ladeeinheit (17) zugewandter Außenkante sowie von an den drei übrigen Ecken angeordneten Stützen (15, 16, 31, 71, 72) gebildet sind.

9. Anordnung nach Anspruch 8, dadurch gekennzeichnet, daß die Flanken des Winkelprofilelements (14) mit den jeweils benachbarten Stützen (15, 31, 71) verschweißt sind.

10. Anordnung nach Anspruch 8 oder 9, dadurch gekennzeichnet, daß mindestens eine der Stützen von einem mit seiner Kante zur Mitte des Eckbeschlags (10'') weisenden Winkelprofilstück (31) gebildet ist.

11. Anordnung nach einem der Ansprüche 8 bis 10, dadurch gekennzeichnet, daß die Flanken des Winkelprofilelements (14) mit den äußeren Öffnungen eines ISO-Eckbeschlags im wesentlichen entsprechenden Ausschnitten (18) versehen sind.

12. Anordnung nach einem der Ansprüche 7 bis 11, dadurch gekennzeichnet, daß der Eckbeschlag (10, 70, 90) an seinen beiden dem Inneren der Ladeeinheit (17) zugewandten Stirnflächen mit Öffnungen zum Herausführen eines seitlichen Ansatzes (22, 52) der Riegelplatte (20, 50, 60, 80) versehen ist.

13. Anordnung nach Anspruch 1, dadurch gekennzeichnet, daß an einer zwischen zwei Ecken der Ladeeinheit (47, 107) gelegenen Stelle ein Beschlag (40, 100) angeordnet ist, der an seinen beiden gegenüberliegenden, den Ecken der Ladeeinheit zugewandten Stirnflächen Öffnungen zum Herausführen eines seitlichen Ansatzes (22, 52) der Riegelplatte (20, 50, 60, 80) aufweist.

14. Anordnung nach Anspruch 12 oder 13, dadurch gekennzeichnet, daß die Riegelplatte (20, 50, 60, 80) in dem Ansatz (22, 52) mindestens ein weiteres Langloch (24) zum Eingriff eines Arretierungselementes aufweist und der Abstand zwischen benachbarten Langlöchern (23, 24) der Riegelplatte im wesentlichen 140 mm beträgt.

15. Anordnung nach einem der Ansprüche 1 bis 14, gekennzeichnet durch an der Riegelplatte (20, 30, 50, 60, 80) vorgesehene Vorsprünge (51, 61), die einen Beschlag der Ladeeinheit begrenzende Eckstützen (15, 16, 31, 41, 71, 72, 91, 92) hintergreifen.

16. Anordnung nach einem der Ansprüche 13 bis 15, dadurch gekennzeichnet, daß an der Riegelplatte (50, 60, 80) einschließlich des Ansatzes (52) zahnartige Vorsprünge (51, 61) vorgesehen sind.

17. Anordnung nach Anspruch 16, dadurch gekennzeichnet, daß die Zahnteilung in keinem ganzzahligen Verhältnis zum Lochabstand in der Riegelplatte (50, 60, 80) steht.

18. Anordnung nach Anspruch 16 oder 17, dadurch gekennzeichnet, daß die zahnartigen Vorsprünge (51) rechteckig gestaltet sind.

19. Anordnung nach Anspruch 16 oder 17, dadurch gekennzeichnet, daß die zahnartigen Vorsprünge (61) als gleichschenklige Dreiecke mit einem Spitzenwinkel von 90° gestaltet sind.

20. Anordnung nach Anspruch 19, dadurch gekennzeichnet, daß mindestens eine Seitenfläche des Beschlags (100) von mehreren nebeneinanderstehenden Winkelprofilstücken (101) gebildet ist.

EP 0 483 605 A2

## FIG.1

## FIG.2

63 mm

106 mm

# FIG.3

# FIG.4

EP 0 483 605 A2

FIG.5

FIG.6

FIG.7

FIG.8

10

FIG. 9

FIG. 10

FIG. 11

FIG.12

FIG.13

FIG.14

FIG.15

FIG.16